# EUROPEAN PATENT SPECIFICATION

(11) **EP 1 555 196 B1**
(45) Date of publication and mention of the grant of the patent: **18.07.2007**
(21) Application number: 04290109.0
(22) Date of filing: 15.01.2004
(51) Int. Cl.: B62J 6/12, H02K 21/22, H02K 21/30, H02K 21/24, H02K 7/18

(54) **Automatic electric power generating device for wheels**
Vorrichtung zur automatischen Stromerzeugung für Räder
Dispositif pour la génération de courant automatique pour roues

(43) Date of publication of application: 20.07.2005
(73) Proprietor: Hung, Pao-Chuang, Sanchong City, Taipei County 241 (TW)
(72) Inventor: Hung, Pao-Chuang, Sanchong City, Taipei County 241 (TW)
(74) Representative: Becker Kurig Straus

(56) References cited:
- DE-A- 19 712 818
- GB-A- 2 389 240
- US-A- 4 725 928
- US-A- 6 118 196
- US-A1- 2002 136 020

## Description

### BACKGROUND OF THE INVENTION

### (a) Field of the Invention

The invention relates to an automatic electric power generating device of a wheel, and more particularly, to an automatic electric power generating device disposed at a wheel and capable of generating electric power using induction between magnetic pole plates and magnetic elements.

### (b) Description of the Prior Art

A common electric power generating device for wheels has minimized weight and volume; however, a shortcoming thereof as being capable of providing only small amounts of electric power still needs to be advanced. Supposed two or more electronic equipments consuming electricity are installed at other certain locations of a vehicle, or two or more lighting devices serving for different functions are individually devised at the wheel and a vehicle body, it is probable that the electric power generated cannot be fully utilized by not being able to overcome shortcomings as providing insufficient electric power or linking the installed locations.

Such a common electric power generating device having the aforementioned shortcomings is for instance disclosed in US 2002/0136020 A1, relates to an automatic wheel-driven generating means mainly includes a base fixedly mounted on a wheel around an axle thereof and provided with a centered hollow column and one or more radially extended hollow pipes for each receiving a light-emitting element therein. A winding reel enclosed between left and right magnetic poles and fixedly mounted on the hollow column; and a magnet holder having a cap screwed into a center thereof and being fixedly mounted on the axle. The magnet holder carries magnets and is associated with the winding reel and the magnetic poles without contact with them. When the wheel rotates, the winding reel and the magnetic poles on the base rotate along with the wheel relative to the magnet holder that is unmovably fixed on the axle, so that an induced current is produced to drive the light-emitting elements to emit light beams.

### SUMMARY OF THE INVENTION

To overcome the aforesaid shortcomings, the primary object of the invention is to provide an automatic electric power generating device capable of supplying other equipments at a vehicle body with electric power.

The secondary object of the invention is to provide an automatic electric power generating device that can be devised with a plurality of additional magnetic pole sets and a plurality of additional magnetic elements.

### BRIEF DESCRIPTION OF THE DRAWINGS

FIG. 1 shows an exploded elevational schematic view of a preferred embodiment according to the invention.
FIG. 2 shows an elevational schematic view of a preferred embodiment according to the invention.
FIG. 3 shows an exploded elevational schematic view illustrating a preferred embodiment being installed to a wheel axle according to the invention.
FIG. 4 shows a sectional schematic view illustrating a preferred embodiment being installed to a wheel axle according to the invention.
FIG. 5 shows an elevational schematic view illustrating a lighting device being installed behind a seat in a preferred embodiment according to the invention.
FIG. 6 shows an elevational schematic view illustrating a lighting device being installed to a front portion of a seat in a preferred embodiment according to the invention.
FIG. 6A shows an enlarged partial schematic view illustrating pins of a lighting device in FIG. 6.
FIG. 6B shows an enlarged partial schematic view illustrating a receiving member in FIG. 6.

### DETAILED DESCRIPTION OF THE PREFERRED EMBODIMENT

To better understand the invention, detailed descriptions of a preferred embodiment shall be given with the accompanying drawings below.

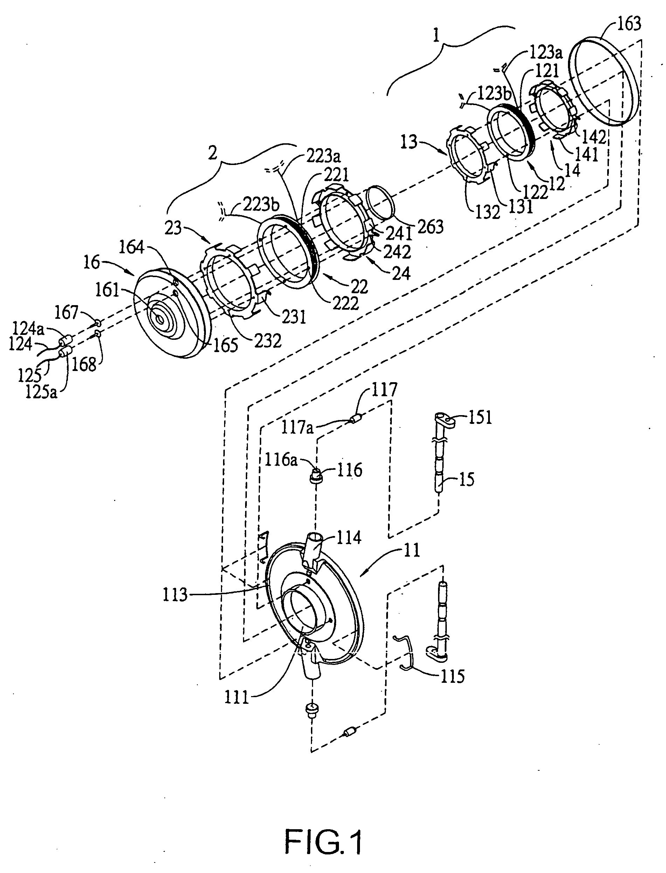

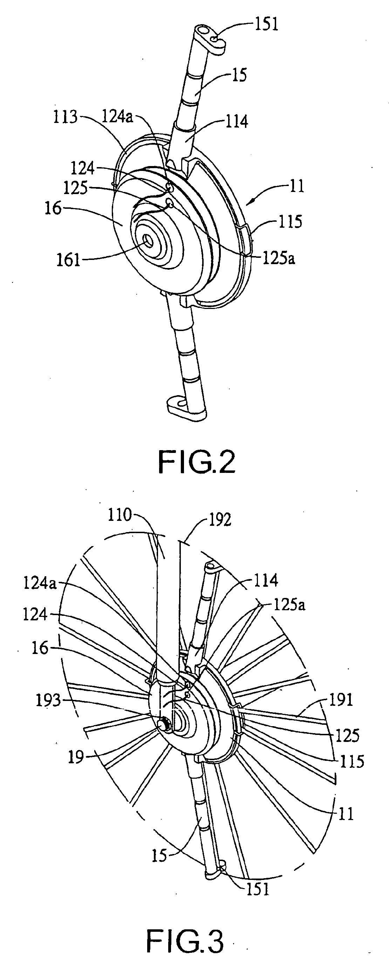

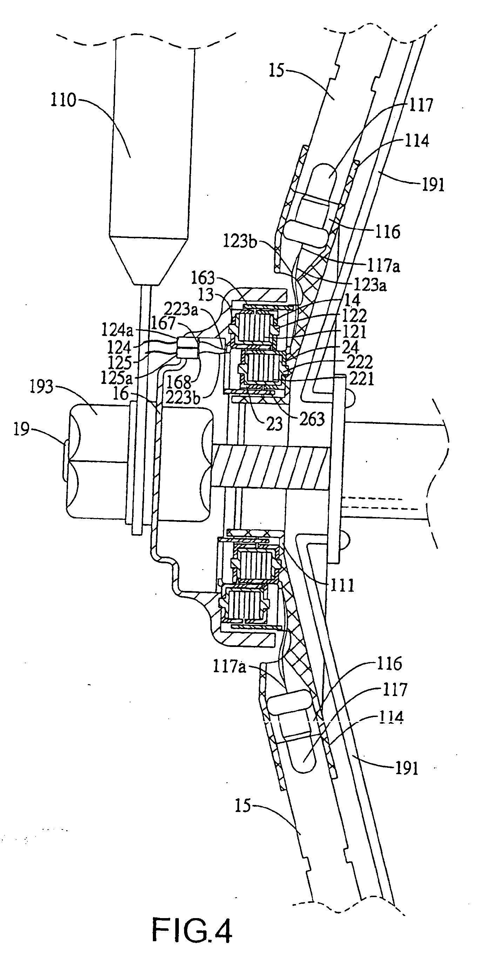

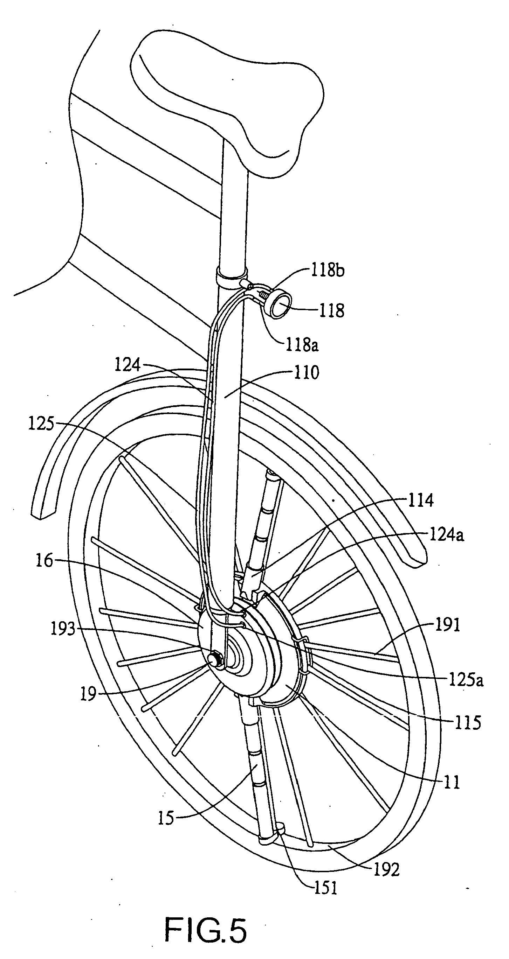

With reference to FIGS. 1, 2, 3, 4 and 5 showing an automatic electric power generating device for wheels in a preferred embodiment according to the invention, the invention comprises:
a wheel hub 11 having an extended hollow column 111 for penetrating with a wheel bearing 19, a wheel groove 113 at an outer edge thereof, two fastened hollow tubes 114, and two hook members 114 clasped in the groove 113; wherein, each hook member 114 has one end thereof first clasped in the groove 113, passed through a wheel axle 191 of the wheel, and the other end thereof clasped in the groove 113, thereby fastening the wheel hub 11 at a center of the wheel;
a first magnetic pole set 1 having a spool 12, a left magnetic pole 13, and a right magnetic pole 14; wherein, the spool 12 is vertically excavated to appear as an H-shaped structure with a guiding coil 121 winded therein, and has a plurality of locating protrusions 122 at two sides thereof; the left and right magnetic poles 13 and 14 are ring-shaped and are extended downward to respectively form a plurality of equidistant magnetic pole plates 131 and 141 at outer edges thereof, with the magnetic pole plates 131 and 141 being alternately located; the magnetic poles 13 and 14 further have two sides thereof drilled to form a plurality of through holes 132 and 142 that accommodate and fasten with the protrusions 122 of the spool 12, so as to tightly enclose the spool 12 within the two magnetic poles 13 and 14; and an assembled structure of the left and right magnetic poles 13 and 14, and the spool 12, is placed around an outer periphery of the hollow column 111 of the wheel hub 11;
a second magnetic element 163 assembled to the wheel hub 11;
a stopper 116 accommodated in the hollow column 114 of the wheel hub 11, and drilled with two through holes 116a for inserting with pins 117a of an illuminating element 117 having a single color or multiple colors; wherein, guiding ends 123a and 123b of the guiding coil 121 winded around aforesaid spool 12 are connected with the pins 117a of the illuminating element 117, so as to accommodate and fasten the illuminating element 117 in the hollow column 114 of the wheel hub 11;
a light-guide post 15 having one end thereof accommodated and fixed in the hollow column 114 of the wheel hub 11, allowing an inner periphery of an end thereof to accommodate the illuminating element 117, and provided with a hook member 151 at an upper end thereof; wherein, the hook member 151 is first butted against a steel ring 192 of the wheel and then clasped at the wheel axle 191 of the wheel to fasten the light-guide post 15;
a housing 16 having an opening 161 at an upper center portion thereof for penetrating with and fastening the wheel bearing 19, and two through holes 164 and 165 for disposing two inserting members 167 and 168, which are for connecting with wires 124 and 125 having receiving members 124a and 125a in front; wherein, a pin 118a of a lighting device 118 is joined with the wire 124, and a pin 118b of the lighting device 118 is joined with the wire 125;
a second magnetic pole set 2 having a spool 22, a left magnetic pole 23 and a right magnetic pole 24; wherein, the spool 22 is vertically excavated to appear as an H-shaped structure with a guiding coil 221 winded therein, and has a plurality of locating protrusions 222 at two sides thereof; the left and right magnetic poles 23 and 24 are ring-shaped and are extended downward to respectively form a plurality of equidistant magnetic pole plates 231 and 241 at outer edges thereof, with the magnetic pole plates 231 and 241 being alternately located; the magnetic pole 23 and 24 further have two sides thereof drilled to form a plurality of through holes 232 and 242 that accommodate and fasten with the protrusions 222 of the spool 22, so as to tightly enclose the spool 22 within the two magnetic poles 23 and 24; an assembled structure of the left and right magnetic poles 23 and 24, and the spool 22, is placed around the housing 16; and guiding ends 223a and 223b of the guiding coil 221 winded around aforesaid spool 22 are connected with the aforesaid inserting member 168; and
a first magnetic element 263 disposed at the housing 16

For assembly, the housing 16 is adjusted to place the spool 12, the left and right magnetic poles 13 and 14 of the first magnetic pole set 1 along with the second magnetic element 163 therein without having the various elements coming into contact with one another. The spool 22 and the left and right magnetic poles 23 and 24 of the second magnetic pole set 2 along with the first magnetic element 263 are placed in the wheel hub 11 without coming into contact with one another. The magnetic pole plates 131 and 141 of the left and right magnetic poles 13 and 14 of the first magnetic pole set 1 are corresponded with the first magnetic element 263. The magnetic pole plates 231 and 241 of the left and right magnetic poles 23 and 24 of the second magnetic pole set 2 are corresponded with the second magnetic element 163. A hook member 115 has one end thereof first clasped in the groove 113 and passed through the wheel axle 119 of the wheel, and then the other end thereof clasped in the groove 113, so as to fix the wheel hub 11 at a center of the wheel. An outer end of the wheel bearing 19 is joined with a vehicle body 110 and fastened using a screw nut 193.

Through rotations of the wheel, the first magnetic pole set 1 and the second magnetic element 163 at the wheel hub 11 are rotated. Electric power is generated by induction between the immobile second magnetic pole set 2 and the first magnetic element 263 at the housing 16, and the rotating first magnetic pole set 1 and the second magnetic element 163 at the wheel hub 11. Using the guiding ends 123a and 123b of the guiding coil 121 winded around the spool 12 and connected with inserting pins 117a of the illuminating element 117, the illuminating device 117 is driven and illuminated. The guiding end 223a of the guiding coil 221 winded around the spool 22 is connected to the inserting member 167, and the guiding end 223b of the guiding coil 221 winded around the spool 22 is connected to the inserting member 168. The wires 124 and 125 having the 124a and 125a in front are respectively connected to the inserting members 167 and 168. The wire 124 is connected to the pin 118a of the lighting device 118, and the wire 125 is connected to the other pin 118b of the lighting device 118, thereby driving the lighting device 118 for illumination. Therefore, the second magnetic element 163, the first magnetic pole set 1, the second magnetic pole set 2 and the first magnetic element 263 provide not only the illuminating element 117 at the wheel but also the lighting device 118 at the vehicle body 110 with electric power.

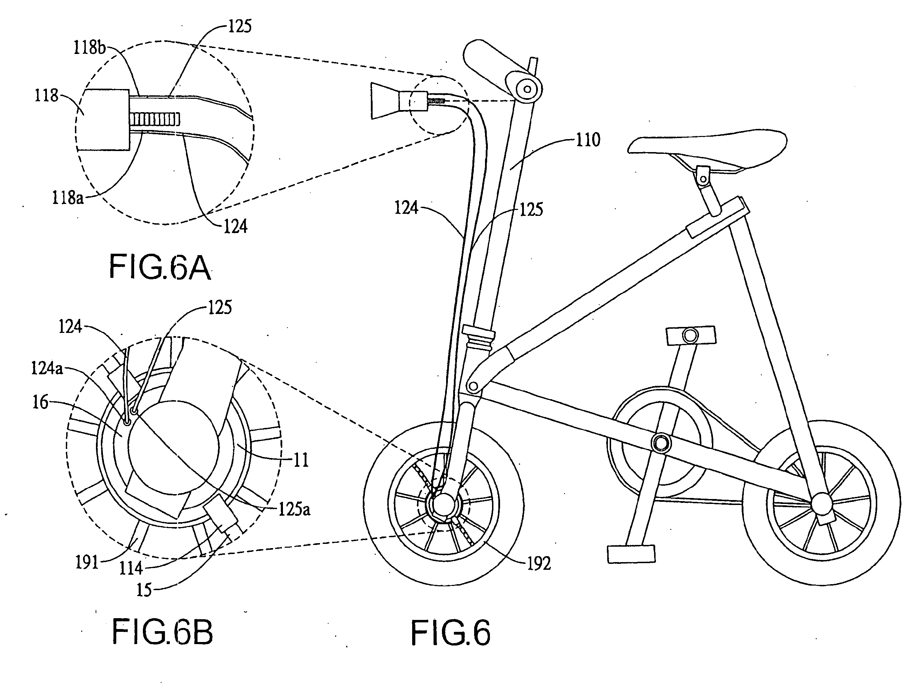

Furthermore, the lighting device 118 in the aforesaid preferred embodiment is disposed behind a seat. However, a iocation of the lighting device 118 is not to be limited to locations behind the seat. The lighting device 118 can also be installed at a front portion of the vehicle body 110 as shown in FIG. 6, or can be a lighting device installed at any locations of the vehicle body 110 and any electric power driven devices installed at any location.

Based on actual needs, the wheel hub 11 may be disposed with additional magnetic pole sets, and the housing 16 may similarly disposed with additional magnetic elements for corresponding with the magnetic pole sets; and the housing 16 may be disposed with additional magnetic elements, and the wheel hub 11 may be disposed with additional magnetic pole sets for corresponding with the magnetic elements.

It is of course to be understood that the embodiment described herein is merely illustrative of the principles of the invention and that a wide variety of modifications thereto may be effected by persons skilled in the art without departing from the scope of the invention as set forth in the following claims.

## Claims

1. An automatic electric power generating device for wheels, comprising:
a wheel hub (11) having a hollow column (111) extended from a center thereof, a first magnetic pole set (1) and a second magnetic element (163); wherein, the first magnetic pole set (1) has a first spool (12), a left magnetic pole (13) and a right magnetic pole (14); the first spool (12) is winded with a coil (121) having one guiding end thereof connectable to a first electric power driven device (117); the left and right magnetic poles (13, 14) are ring-shaped and are extended downward to respectively form a plurality of equidistant magnetic pole plates (131, 141) at outer edges thereof, with the magnetic pole plates (131, 141) being alternately located when the left and right magnetic poles (13, 14) are fastened to each other to tightly enclose the first spool (12) therein; and an assembled structure of the left and right magnetic poles (13, 14) and the first spool (12) is fixed to the wheel hub (11);
**characterized by**
a housing (16) having an opening (161) at a center portion thereof, a first magnetic element (263) and a second magnetic pole set (2); wherein, the second magnetic pole set (2) consists of a second spool (22), a left magnetic pole (23) and a right magnetic pole (24); the second spool (22) is wound with a coil (221) having one guiding end thereof connectable to a second electric power driven device (118); the left and right magnetic poles (23, 24) are ring-shaped and are extended downward to respectively form a plurality of equidistant magnetic pole plates (231, 241) at outer edges thereof, with the magnetic pole plates (231, 241) being alternately located when the left and right magnetic poles (23, 24) are fastened to each other to tightly enclose the second spool (22) therein; the first spool (12) and the left and right magnetic poles (13, 14) of the first magnetic pole set (1), and the second magnetic element (263), are placed in the housing (16) without coming into contact with one another; the second spool (22) and the left and right magnetic poles (23, 24) of the second magnetic pole set (2), and the first magnetic element (263), are placed in the wheel hub (11) without coming into contact with one another; the magnetic pole plates (131, 141) of the left and right magnetic poles (13, 14) of the first magnetic pole set (1) are corresponding to the first magnetic element (263); and the magnetic pole plates (231, 241) of the left and right magnetic poles (23, 24) of the second magnetic pole set (2) are corresponding to the second magnetic element (163); and
through rotations of the wheel, the first magnetic pole set (1) and the second magnetic element (163) at the wheel hub (11) are rotated; electric power is generated by induction between the immobile second magnetic pole set (2) and the first magnetic element (263) at the housing (16), and the rotating first magnetic pole set (1) and the second magnetic element (163) at the wheel hub (11), thereby driving the first electric power driven device (117) and providing the second electric power driven device (118) with electric power and accomplishing automatically generating electric power without requiring any electric cells.

2. The automatic electric power generating device for wheels in accordance with claim 1,**characterized in that** the wheel hub (11) may be disposed with additional magnetic pole sets, and the housing (16) may be disposed with additional magnetic elements for corresponding with the magnetic poles sets at the wheel hub (11).

3. The automatic electric power generating device for wheels in accordance with claim 1, **characterized in that** the wheel hub (11) may be disposed with additional magnetic elements, and the housing (16) may be disposed with additional magnetic poles sets for corresponding with the magnetic elements at the wheel hub (11).

4. The automatic electric power generating device for wheels in accordance with claim 1, **characterized in that** the first electric power driven device (117) is an illuminating element.

5. The automatic electric power generating device for wheels in accordance with claim 1, **characterized in that** the second electric power driven device (118) is a lighting device installed behind a seat.

6. The automatic electric power generating device for wheels in accordance with claim 1, **characterized in that** the second electric power driven device (118) is a lighting device installed at a front portion of a vehicle.

## Patentansprüche

1. Automatische, elektrische Energie erzeugende Vorrichtung für Räder, umfassend:
eine Radnarbe (11) mit einer hohlen Säule bzw. einem Rohrstück (111), die sich von einem Zentrum hiervon erstreckt, ein erster magnetischer Polsatz (1) und ein zweites magnetisches Element (163); wobei der erste magnetische Polsatz (1) einen ersten Spulenkörper (12), einen linken magnetischen Pol (13) und einen rechten magnetischen Pol (14) aufweist; der erste Spulenkörper (12) ist mit einer Spule (121) umwickelt, mit einem Führungsende davon verbindbar mit einer ersten, von elektrischer Energie angetriebenen Vorrichtung (117); der linke und rechte magnetische Pol (13, 14) ist ringförmig und abwärts erstreckt, um jeweils eine Vielzahl äquidistanter magnetischer Polplatten (131, 141) an äußeren Enden davon zu bilden, wobei die magnetischen Polplatten (131, 141) abwechselnd angeordnet sind, wenn der linke und rechte magnetische Pol (13, 14) aneinander befestigt sind, um den ersten Spulenkörper (12) darin eng zu umschließen; und eine zusammengesetzte Struktur des linken und rechten magnetischen Pols (13, 14) und des ersten Spulenkörpers (12) ist an der Radnarbe (11) befestigt;
**dadurch gekennzeichnet, dass**
ein Gehäuse (16) eine Öffnung (161) an einem Mittelteil davon, ein erstes magnetisches Element (263) und einen zweiten magnetischen Polsatz (2) hat; wobei der zweite magnetische Polsatz (2) aus einem zweiten Spulenkörper (22), einem linken magnetischen Pol (23) und eine rechten magnetischen Pol (24) besteht; der zweite Spulenkörper (22) ist mit einer Spule (221) umwickelt, mit einem Führungsende davon verbindbar mit einer zweiten, von elektrischer Energie angetriebenen Vorrichtung (118); der linke und rechte magnetische Pol (23, 24) ist ringförmig und abwärts erstreckt, um jeweils eine Vielzahl äquidistanter magnetischer Polplatten (231, 241) an äußeren Enden davon zu bilden, wobei die magnetischen Polplatten (231, 241) abwechselnd angeordnet sind, wenn der linke und rechte magnetische Pol (23, 24) aneinander befestigt sind, um den zweiten Spulenkörper (22) darin eng zu umschließen; die erst Spulenkörper (12) und der linke und rechte magnetische Pol (13, 14) des ersten magnetischen Polsatzes (1) und das zweite magnetische Element (263) sind in dem Gehäuse (16) platziert, ohne miteinander in Kontakt zu kommen; der zweite Spulenkörper (22) und der linke und rechte magnetische Pol (23, 24) des zweiten magnetischen Polsatzes (2) und das erste magnetische Element (263) sind in der Radnarbe (11) platziert, ohne miteinander in Kontakt zu kommen; die magnetischen Polplatten (131, 141) des linken und rechten magnetischen Pols (13, 14) des ersten magnetischen Polsatzes (1) korrespondieren zum ersten magnetischen Element (263); und die magnetischen Polplatten (231, 241) des linken und rechten magnetischen Pols (23, 24) des zweiten magnetischen Polsatzes (2) korrespondieren zum zweiten magnetischen Element (163); und
durch Drehungen des Rades werden der erste magnetische Polsatz (1) und das zweite magnetische Element (163) und die Radnarbe (11) gedreht; elektrische Energie wird durch Induktion zwischen dem unbeweglichen zweiten magnetischen Polsatz (2) und dem ersten magnetischen Element (263) am Gehäuse (16), und dem sich drehenden ersten magnetischen Polsatz (1) und dem zweiten magnetischen Element (163) an der Radnarbe (11) erzeugt, wodurch die erste, von elektrischer Energie angetriebene, Vorrichtung (117) angetrieben wird und die zweite, von elektrischer Energie angetriebenen, Vorrichtung (118) mit elektrischer Energie versorgt wird und wodurch automatische Erzeugung elektrischer Energie ohne Bedarf für Batterien verwirklicht wird.

2. Automatische, elektrische Energie erzeugende Vorrichtung für Räder nach Anspruch 1, **dadurch gekennzeichnet, dass** die Radachse (11) mit zusätzlichen magnetischen Polsätzen ausgestattet werden kann und das Gehäuse (16) mit zusätzlichen magnetischen Elementen zum Korrespondieren mit den magnetischen Polsätzen an der Radachse (11) ausgestattet werden kann.

3. Automatische, elektrische Energie erzeugende Vorrichtung für Räder nach Anspruch 1, **dadurch gekennzeichnet, dass** die Radachse (11) mit zusätzlichen magnetischen Elementen ausgestattet werden kann und das Gehäuse (16) mit zusätzlichen magnetischen Polsätzen zum Korrespondieren mit den magnetischen Elementen an der Radachse ausgestattet werden kann.

4. Automatische, elektrische Energie erzeugende Vorrichtung für Räder nach Anspruch 1, **dadurch gekennzeichnet, dass** die erste, von elektrischer Energie angetriebene Vorrichtung (117) ein Beleuchtungselement ist.

5. Automatische, elektrische Energie erzeugende Vorrichtung für Räder nach Anspruch 1, **dadurch gekennzeichnet, dass** die zweite, von elektrischer Energie angetriebene Vorrichtung (118) eine Leuchtvorrichtung ist, die hinter einem Sitz angbracht ist.

6. Automatische, elektrische Energie erzeugende Vorrichtung für Räder nach Anspruch 1, **dadurch gekennzeichnet, dass** die zweite, von elektrischer Energie angetriebene, Vorrichtung (118) eine Leuchtvorrichtung ist, die an einem Vorderteil eines Fahrzeugs angebracht ist.

## Revendications

1. Dispositif pour la génération de courant automatique pour roues, comprenant :
un moyeu (11) ayant une colonne creuse (111) s'étendant depuis un centre de celui-ci, un premier ensemble de pôles magnétiques (1) et un second élément magnétique (163) ; dans lequel, le premier ensemble de pôles magnétiques (1) a une première bobine (12), un pôle magnétique gauche (13) et un pôle magnétique droit (14) ; la première bobine (12) est enroulée avec un bobinage (121) ayant une extrémité de guidage de celui-ci pouvant être connectée à un premier dispositif actionné par un courant électrique (117); les pôles magnétiques gauche et droit (13, 14) ont une forme annulaire et s'étendent vers le bas pour respectivement former une pluralité de plaques de pôles magnétiques équidistantes (131, 141) au niveau des bords externes de ceux-ci, avec les plaques de pôles magnétiques (131, 141) étant alternativement positionnées lorsque les pôles magnétiques gauche et droit (13, 14) sont fixés l'un à l'autre pour y enclore fermement la première bobine (12) ; et une structure assemblée des pôles magnétiques gauche et droit (13, 14) et la première bobine (12) est fixée au moyeu (11);
**caractérisé par**
un logement (16) ayant une ouverture (161) dans une partie centrale de celui-ci, un premier élément magnétique (263) et un second ensemble de pôles magnétiques (2) ; dans lequel le second ensemble de pôles magnétiques (2) consiste en une seconde bobine (22), un pôle magnétique gauche (23) et un pôle magnétique droit (24) ; la seconde bobine (22) est enroulée avec un bobinage (221) ayant une extrémité de guidage de celui-ci pouvant être connectée à un second dispositif actionné par un courant électrique (118) ; les pôles magnétiques gauche et droit (23, 24) ont une forme annulaire et s'étendent vers le bas pour respectivement former une pluralité de plaques de pôles magnétiques équidistantes (231, 241) au niveau des bords externes de ceux-ci, avec les plaques de pôles magnétiques (231, 24.1) étant alternativement positionnées lorsque les pôles magnétiques gauche et droit (23, 24) sont fixés l'un à l'autre pour y enclore fermement la seconde bobine (22); la première bobine (12) et les pôles magnétiques gauche et droit (13, 14) du premier ensemble de pôles magnétiques (1), et le second élément magnétique (263) sont placés dans le logement (16) sans entrer en contact l'un avec l'autre ; la seconde bobine (22) et les pôles magnétiques gauche et droit (23, 24) du second ensemble de pôles magnétiques (2), et le premier élément magnétique (263) sont placés dans le moyeu (11) sans entrer en contact l'un avec l'autre ; les plaques de pôles magnétiques (131, 141) des pôles magnétiques gauche et droit (13, 14) du premier ensemble de pôles magnétiques (1) correspondent au premier élément magnétique (263) ; et les plaques de pôles magnétiques (231, 241) des pôles magnétiques gauche et droit (23, 24) du second ensemble de pôles magnétiques (2) correspondent au second élément magnétique (163) ; et
à travers les rotations de la roue, le premier ensemble de pôles magnétiques (1) et le second élément magnétique (163) situés dans le moyeu (11) tournent ; un courant électrique est généré par induction entre le second ensemble de pôles magnétiques immobile (2) et le premier élément magnétique (263) dans le logement (18), et le premier ensemble de pôles magnétiques en rotation (1) et le second élément magnétique (163) dans le moyeu (11), en entraînant par ce moyen le premier dispositif actionné par un courant électrique (117) et alimentant le second dispositif actionné par un courant électrique (118) en courant électrique et accomplissant automatiquement une génération de courant électrique sans requérir à de quelconques piles électriques.

2. Dispositif pour la génération de courant automatique pour roues selon la revendication 1, **caractérisé en ce que** le moyeu (11) peut être disposé avec des ensembles de pôles magnétiques supplémentaires, et le logement (16) peut être disposé avec des éléments magnétiques supplémentaires pour correspondre avec les ensembles de pôles magnétiques situés dans le moyeu (11).

3. Dispositif pour la génération de courant automatique pour roues selon la revendication 1, **caractérisé en ce que** le moyeu (11) peut être disposé avec des éléments magnétiques supplémentaires, et le logement (16) peut être disposé avec des ensembles de pôles magnétiques supplémentaires pour correspondre avec les éléments magnétiques situés dans le moyeu (11).

4. Dispositif pour la génération de courant automatique pour roues selon la revendication 1, **caractérisé en ce que** le premier dispositif actionné par un courant électrique (117) est un élément d'éclairage.

5. Dispositif pour la génération de courant automatique pour roues selon la revendication 1, **caractérisé en ce que** le second dispositif actionné par un courant électrique (118) est un dispositif d'éclairage installé derrière une selle.

6. Dispositif pour la génération de courant automatique pour roues selon la revendication 1, **caractérisé en ce que** le second dispositif actionné par un courant électrique (118) est un dispositif d'éclairage installé à l'avant d'un véhicule.
